# EUROPEAN PATENT SPECIFICATION

(11) **EP 3 336 167 B1**
(45) Date of publication and mention of the grant of the patent: **02.08.2023**
(21) Application number: 16834923.1
(22) Date of filing: 14.07.2016
(51) Int. Cl.: C12G 3/04, C12G 3/022, C12G 3/023, A23L 2/52, A23L 2/00, C12C 5/02, C12G 3/06

(54) **BEER-LIKE EFFERVESCENT BEVERAGE**
BIERÄHNLICHES BRAUSEGETRÄNK
BOISSON EFFERVESCENTE DE TYPE BIÈRE

(30) Priority: 11.08.2015 JP 2015159075; 19.08.2015 JP 2015162237
(43) Date of publication of application: 20.06.2018
(73) Proprietor: Asahi Breweries, Ltd., Tokyo 130-8602 (JP); Asahi Group Holdings, Ltd., Tokyo 130-8602 (JP)
(72) Inventor: KUSUNOKI, Keizo, Moriya-shi Ibaraki 302-0106 (JP); TAKAHASHI, Koichiro, Moriya-shi Ibaraki 302-0106 (JP)
(74) Representative: Ernest Gutmann - Yves Plasseraud S.A.S.
(86) International application number: PCT/JP2016/070872
(87) International publication number: WO 2017/026226

(56) References cited:
- WO-A1-2005/056746
- WO-A1-2013/077056
- WO-A1-2014/196265
- JP-A- 2014 195 475
- JP-A- 2014 195 475
- JP-A- 2015 123 035
- JP-A- 2015 123 037
- JP-A- 2015 123 038
- JP-A- 2015 123 038
- Anonymous: "Sapporo Green Aroma", SHIN HATSUBAI, 8 January 2015 (2015-01-08), XP055514111, Retrieved from the Internet: URL:HTTP://WWW.SAPPOROBEER.JP/NEWS_RELEASE /0000020964/PDF/20150108G [retrieved on 2018-10-10]
- DATABASE GNPD [Online] MINTEL; 26 March 2008 (2008-03-26), anonymous: "Beer Fine", XP055569438, retrieved from www.gnpd.com Database accession no. 886509
- DATABASE GNPD [Online] MINTEL; 18 April 2012 (2012-04-18), anonymous: "70% Sugar Reduced Rich Malt Beer", XP055569450, retrieved from www.gnpd.com Database accession no. 1777891
- SAPPORO BREWERIES LTD.: "Sapporo Green Aroma", Shin Hatsubai, 8 January 2015 (2015-01-08), XP055514111, Retrieved from the Internet: URL:URL:http://www.sapporobeer. jp/news_release/0000020964/pdf [retrieved on 2016-09-07]
- "Eiyo Seibun Ichiran [List of Nutrients]", SAPPORO BREWERIES LTD. , XP009508584, Retrieved from the Internet: URL:http://www. sapporobeer.jp/product/nutrition/#section3 [retrieved on 2016-09-07]

## Description

### Technical Field

The present invention relates to a beer-like effervescent beverage exhibiting excellent richness and sharpness despite having a low sugar content.

Priority is claimed on Japanese Patent Application No. 2015-159075, filed on August 11, 2015, and Japanese Patent Application No. 2015-162237, filed on August 19, 2015, the contents of which are incorporated herein by reference.

### Background Art

A variety of beer-like effervescent beverages such as beer and low-malt beer have been introduced on the market as consumer taste has diversified more and more. In particular, the health consciousness of consumers in recent years has increased the demand for beer-like effervescent beverages with low calories or low sugar content. As an example, in a case of a fermented beer-like effervescent beverage produced through a fermentation process, it is possible to reduce the sugar content and calories of the beverage by, for example, reducing the use amount of malt containing a relatively large amount of non-assimilable sugar with respect to yeast as a fermentation raw material, and using instead a large amount of saccharides that do not contain non-assimilable sugar such as liquid sugar.

However, a decrease in the sugar content may cause the beer-like effervescent beverage to become watery and lose some of its richness and flavor. In response, several methods have been disclosed for improving the flavor of fermented beer-like effervescent beverages with low sugar content. For example, PTL 1 discloses a method for improving the flavor of fermented low sugar beer-like effervescent beverage by causing yeast to produce isoamyl acetate in the fermentation process, which employs an amino source containing leucine or a leucine residue as a fermentation raw material. PTL 2 discloses a fermented low sugar beer-like effervescent beverage exhibiting well-balanced taste and flavor which can be obtained by employing glucose and sucrose as the main fermentation raw materials and thereby reducing the yeast death rate during fermentation. PTL 3 discloses a fermented beer-like effervescent beverage with low sugar which can be produced even in a case where the malt usage ratio has been increased with respect to the fermentation raw materials by adding glucoamylase in at least one of a feeding process and fermentation process, and adding transglucosidase in the fermentation process. PTL 4 discloses a non-fermented beer-like effervescent beverage in which the sugar concentration is 0.5g/100 ml or less and linalool is added as a hop-like fragrance ingredient. PTL 5 discloses a fermented beverage with a strong richness and good lightness containing linalool and other compounds. OP 1 discloses an effervescent liquor containing a large amount of linalool, which is a fragrance component derived from three kinds of botanical materials, hops, coriander seed, and orange peel, featuring a fragrance perceived as relaxing and a light flavor with 80% less sugar. OP 2 discloses a 5% alcohol beer with 50% less sugars, that is, sugar concentration of 1.3g/100ml. OP 3 discloses a beer containing sugar concentration of 0.6 - 0.9 g/100ml.

### Citation List

### Patent Literature and Online Publications

[PTL 1] Japanese Unexamined Patent Application, First Publication No. 2012-105673
[PTL 2] Japanese Patent (Granted) Publication No. 4260207
[PTL 3] PCT International Publication No. WO2014/196265
[PTL 4] Japanese Patent Application No. 2014 195475 A
[PTL 5] Japanese Patent Application No. 2015 123038 A
[OP 1] "Sapporo Green Aroma", Shin Hatsubai, 8 January 2015, XP055514111, http://www.sapporobeer.jp/news_release/0000020964/pdf/20150108G
[OP 2] "Beer Fine", Database GNPD, Mintel, 26 March 2008, XP055569438
[OP 3] "70% Sugar Reduced Rich Malt Beer", Database GNPD, Mintel, 18 April 2012, XP055569450

### Summary of Invention

### Technical Problem

An object of the present invention is to provide a beer-like effervescent beverage which exhibits enhanced richness despite having a low sugar content.

### Solution to Problem

As a result of extensive research to solve the above-mentioned challenge, the present inventors have found that a beer-like effervescent beverage with low sugar obtained by adjusting the ratio of a linalool content to a sugar content in the beverage within a predetermined range so as to have the sugar content of 2.0 g/100 mL or less exhibits enhanced richness, thereby completing the present invention.

Beer-like effervescent beverages and a method of producing a beer-like effervescent beverage according to the present invention are the following 1. A beer-like effervescent beverage, wherein a sugar content is 0.9 to 1.5 g/100 mL and a ratio of a linalool content (ug/L) relative to the sugar content (g/100 mL) is 5 to 15.
2. The beer-like effervescent beverage according to Claim 1. which is a fermented beer-like effervescent beverage having a malt usage ratio relative to fermentation raw material of 50% or more.
3. A method of producing a beer-like effervescent beverage in which a sugar content is 0.9 to 1.5 g/100 mL and a ratio of a linalool content (ug/L) relative to the sugar content (g/100 mL) is 5 to 15, the method comprising: a process of fermenting a fermentation raw material having a malt usage ratio of 50% or more with yeast.

### Advantageous Effects of Invention

The invention is defined by the claims. According to the present invention, a beer-like effervescent beverage exhibiting excellent richness and sharpness despite having a low sugar content can be provided.

### Description of Embodiments

A "beer-like effervescent beverage" referred to throughout the present invention and the present specification means an effervescent beverage exhibiting a likeness to beer (flavor reminiscent of beer in terms of flavor). The alcohol concentration of the beer-like effervescent beverage according to the present invention is not limited; the beer-like effervescent beverage may be an alcoholic beverage having an alcohol concentration of 0.5% by volume or more, or may be a so-called non-alcoholic beverage having an alcohol concentration of less than 0.5% by volume. The beer-like effervescent beverage according to the present invention may be a fermented beer-like effervescent beverage produced through a fermentation process, which is a process of fermenting raw materials with yeast, or may be a non-fermented beer-like effervescent beverage produced without undergoing such a fermentation process. Specific examples thereof include beer, low-malt beer, and non-alcohol beer. Besides the above-mentioned, the beer-like effervescent beverage according to the present invention may also be a liqueur obtained by mixing a beverage which has been produced through a fermentation process together with an alcohol-containing distillate.

Note that, the alcohol-containing distillate refers to a solution containing alcohol obtained through a distillation operation, for which those classified as distilled liquor in general may be used. Examples thereof include raw-alcohols, spirits, whiskey, brandy, vodka, rum, tequila, gin, and shochu.

The beer-like effervescent beverage according to the present invention is characterized in that a sugar content is 0.9 to 1.5 g/100 or less, and a ratio of linalool content (µg/L) to sugar content (g/100 mL) ([linalool content (µg/L)]/[sugar content (g/100 mL)]; hereinafter also referred to as "linalool/sugar ratio") is 5 to 15. Although linalool is a main aroma component of hop aroma, the content in a typical beer-like effervescent beverage is extremely low because of its high volatility. In particular, with respect to a beer-like effervescent beverage with low sugar content, the use amount of raw materials such as hops tends to be reduced for the purpose of reducing introduction of sugars derived from raw materials, and thus in many cases the linalool content is either extremely low or below the detection limit. However, the beer-like effervescent beverage according to the present invention, which contains a sufficient amount of linalool such that the linalool/sugar ratio is as high as 5 to 15, is capable of exhibiting enhanced richness despite having a low sugar content. In particular, although a beer-like effervescent beverage is likely to exhibit somewhat weak sharpness when the beer-like effervescent beverage has a relatively high sugar content in a range of 0,9-1,5 g/100 mL, the sharpness of the beer-like effervescent beverage can be improved by including linalool such that the linalool/sugar ratio is 5 to 15.

The sugar content of the beer-like effervescent beverage according to the present invention is 0.9 to 1.5 g/100 mL, and still more preferably 1.0 to 1.5 g/100 mL.

The linalool/sugar ratio of the beer-like effervescent beverage according to the present invention is within a range of 5 to 15 from the viewpoint of the balance between richness and sharpness.

In the present invention and the present specification, "sugar" refers to the sugars defined by the nutrition labeling standard of food (Ministry of Health, Labor and Welfare Notification No. 176 Heisei 15). The sugar content of the beer-like effervescent beverage can be calculated by substituting the amount of proteins, lipids, dietary fibers, mineral contents, alcohol contents, and moisture contents from the entire beverage weight. The amount of proteins, lipids, dietary fibers, mineral contents, and moisture contents in the beverage can be measured according to the methods listed in the nutrition label standard. Specifically, the amount of proteins can be measured by a nitrogen determination method, the amount of lipids can be measured by an ether extraction method, chloroform-methanol mixed solution extraction method, the Gel Bell method, an acid decomposition method, or the Roese Gottlieb method, the amount of dietary fiber can be measured by high-performance liquid chromatography or the Prosky method, the amount of mineral contents can be measured by a magnesium acetate added ashing method, direct ashing method, sulfuric acid added ashing method, and the amount of moisture content can be measured by the Karl Fischer method, a drying aid method, reduced pressure heating and drying method, atmospheric pressure heating and drying method, or plastic film method. These are widely known measurement methods for those skilled in the art.

In a case where the beer-like effervescent beverage according to the present invention is a fermented beer-like effervescent beverage, the sugar content thereof may be adjusted by controlling the kinds and use amounts of fermentation raw materials, the condition for saccharification treatment of the fermentation raw materials, enzyme addition to the fermentation raw material solution, final fermentation degree and the like. For example, the sugar content in the beverage to be obtained may be reduced by reducing the use amount of the fermentation raw materials. Further, the sugar content in the beverage to be obtained may also be reduced by reducing the malt usage ratio of the fermentation raw materials without reducing the amount of fermentation raw materials. Further, the sugar content in the beverage to be obtained may also be reduced by increasing the final fermentation degree and thus reducing introduction of assimilable sugars into the final product beverage. Besides the above methods, as disclosed in PTL 3, converting non-assimilable saccharides into assimilable sugars through enzyme reaction in a feeding process or a fermentation process also allows a fermented beer-like effervescent beverage having 2.0 g/100 mL or less of sugar content in the beverage to be produced even in a case where the use ratio of fermentation raw materials with rich non-assimilable sugar content (for example, malt) is relatively high.

In a case where the beer-like effervescent beverage according to the present invention is a non-fermented beer-like effervescent beverage, the sugar content in the beverage can be adjusted to 0,9-1,5 g / 100 ml by, for example, using raw materials with low sugar content and controlling the use amount as appropriate.

Further, the linalool content in the beer-like effervescent beverage may be quantified by GC-MS (gas chromatography-mass spectrometry).

The linalool concentration of the beer-like effervescent beverage according to the present invention may be adjusted by adding linalool as an additive, or may be adjusted by using a suitable amount of a kind of hop that contains linalool as a hop for scenting. The linalool to be added as an additive may be obtained by synthesis or by extraction or purification from natural products, or may be in a form of fragrance containing linalool. Examples of the fragrance containing linalool include hop fragrance.

In the fermentation process, production of various compounds by yeast causes the fermented solution to include an abundant amount of a diversity of compounds. This allows the fermented beer-like effervescent beverage to include a more abundant amount of a diversity of compounds derived from fermentation than a non-fermented beer-like effervescent beverage, which is prepared by mixing raw materials having a relatively homogeneous composition, whereby the flavor and richness of the beverage are likely to increase. Therefore, the beer-like effervescent beverage according to the present invention is preferably a fermented beer-like effervescent beverage rather than a non-fermented beer-like effervescent beverage. Among them, due to its stronger richness and excellent beer-like flavor, the fermented beer-like effervescent beverage is preferably a fermented beer-like effervescent beverage including at least partially malt in the fermentation raw materials, more preferably a fermented beer-like effervescent beverage in which the malt usage ratio with respect to the fermentation raw materials is 20% or more, and even more preferably a fermented beer-like effervescent beverage in which the malt usage ratio with respect to the fermentation raw materials is 50% or more.

In a case where the beer-like effervescent beverage according to the present invention is a fermented beer-like effervescent beverage, the fermented beer-like effervescent beverage may be produced in the same way as a typical fermented beer-like effervescent beverage except that the content of sugar in the beverage and the linalool/sugar ratio are adjusted to be within a specific range. The typical fermented beer-like effervescent beverage may be produced through the processes of feeding (preparation of fermentation raw material solution), fermentation, storage, and filtration.

The fermentation raw materials to be used may be formed of only the grain raw materials or only the sugar raw material, or may be a mixture of both. Examples of the grain raw materials include barley, wheat, and malts of these, rice, corn and soybeans, potatoes and the like. The grain raw materials may be used in a form of grain syrup, grain extract or the like. The grain raw material used in the present invention may be a single kind of grain raw material or may be a mixture of a plurality of kinds of grain raw materials. For example, a main raw material to be used may be a ground product of malt and an auxiliary raw material to be used may be a ground product of rice or corn. Examples of sugar raw materials include saccharides such as liquid sugar. As described previously, as the used ratio of the grain raw materials to fermentation raw materials increases a fermented beer-like effervescent beverage with strong richness is likely to be obtained more easily, but the sugar content is likely to increase as well.

In a feeding process (process for preparing fermentation raw material solution), a fermentation raw material solution is prepared from the fermentation raw materials at first. Specifically, the mixture including fermentation raw materials and water as a raw material is prepared and then heated so as to saccharify starch in the fermentation raw materials. An auxiliary raw material other than the fermentation raw materials and water may be added into the mixture. Examples of the auxiliary raw material include hops, yeast extracts, proteolytic products, water-soluble dietary fibers, sweetening agents, bittering agents, fruit juices, coloring agents, herbs, and fragrances.

The term "water-soluble dietary fibers" refers to carbohydrates soluble in water and indigestible or difficult to be digested by human digestive enzymes. Examples of the water-soluble dietary fibers used in the present invention include indigestible dextrin, polydextrose, soybean dietary fibers, galactomannan, inulin, guar gum decomposition products, pectin, and gum arabic. Among these water-soluble dietary fibers, a single dietary fiber may be used or two or more thereof may be used in combination.

The sweetening agent to be used may be sugar or may be a sweetening agent having a relatively low degree of sweetness or may be a sweetening agent having a relatively high degree of sweetness. Specifically, examples of the sweetening agent having a relatively low degree of sweetness include polysaccharides, and sweet amino acids. "Polysaccharide" refers to a sugar in which three or more monosaccharides have been polymerized. Polysaccharide is mainly classified into starch, dextrin, and oligosaccharide in terms of its size. Oligosaccharide is a sugar obtained by polymerizing about 3 to 10 monosaccharides, and dextrin is a sugar obtained by hydrolyzing starch, which is larger than oligosaccharide. Examples of the sweet amino acids include alanine and glycine, with alanine being preferred. Examples of the sweetening agents having a relatively high degree of sweetness include acesulfame potassium, neotame, aspartame, sucralose, stevia, and enzyme-treated stevia. Among these sweetening agents, a single sweetening agent may be used or two or more thereof may be used in combination.

The bittering agent is not limited to a particular bittering agent as long as it is capable of imparting the same or similar bitterness as beer to the fermented beer-like effervescent beverage as a commercial product; the bittering agent may be either of a component causing bitterness included in hops or a component causing bitterness not included in hops. Specific examples of the bittering agent include: bitterness-imparting components such as magnesium salts, calcium salts, tributyl citrate, triethyl citrate, naringin, quasin, oxides of iso-α acids and tetraiso-α acids/-β acids, quinine, momorudecin, quercitrin, theobromine, and caffeine; and bitterness-imparting raw materials such as goya, swertia japonica tea, kudin tea, wormwood extract, gentian extract, and kina extract. Among these bittering agents, a single bittering agent may be used or two or more thereof may be used in combination.

Examples of the proteolytic products include soybean proteolytic products.

Examples of the coloring agents include caramel pigment.

Examples of the fragrances include beer flavor, beer fragrance, hop fragrance.

Preferably added in the feeding process are saccharification enzymes such as α-amylase, glucoamylase, pullulanase, and enzymatic agents such as protease. These enzymes promote a decomposition reaction of the non-assimilable sugars in the fermentation raw materials into assimilable sugars such that a fermentation raw material solution in which the non-assimilable sugar content is suppressed low can be prepared even with fermentation raw materials having a high malt usage ratio.

Saccharification treatment is carried out using enzymes derived from grain raw materials or separately added enzymes. The temperature or time in the saccharification treatment is adjusted, as appropriate, in consideration of conditions such as the kinds of grain raw materials used, grain raw material proportion in the whole fermentation raw materials, the kinds and mixture amount of added enzymes, and the desired product quality of the fermented beer-like effervescent beverage. For example, the saccharification treatment may be performed by conventional methods such as a method of keeping a mixture including grain raw materials and the like at 35°C to 70°C for 20 to 90 mins. Adjusting the saccharification treatment time allows the saccharification efficiency to be controlled and the sugar content of the fermented beer-like effervescent beverage eventually obtained to fall within a desired range.

The saccharide solution acquired after the saccharification treatment may be boiled to prepare a broth (boiled product of saccharide solution). It is preferable that the saccharide solution be filtrated before boiling treatment and then the acquired filtrate be subjected to boiling treatment. Further, a solution obtained by adding hot water into malt extract may be used in place of the filtrate acquired from a saccharide solution and then boiled. A method for boiling and condition thereof may be determined as appropriate.

Herbs and the like may be added before boiling treatment or during boiling treatment so as to produce a fermented beer-like effervescent beverage having a desired flavor. In particular, it is preferable that hops be added before boiling treatment or during boiling treatment. Boiling treatment in the presence of hops allows flavor/aroma components of hops to boil down efficiently. The addition amount, manner of addition (for example, split addition over several times), and boiling condition of hops may be determined as appropriate.

For example, in a case where the use amount of hops for scenting is used to adjust the linalool concentration of the beverage, hops for imparting bitterness are added into the saccharide solution obtained after saccharification treatment and the boiling treatment is carried out, in which a sufficient amount of hops for scenting is added when the boiling treatment is almost complete, whereby the boiling treatment ends. A relatively short boiling time under the presence of hops added for scenting makes it possible to obtain a fermented beer-like effervescent beverage with a relatively high linalool concentration. Adding the hops for scenting after the boiling treatment has ended is also possible.

Lees in the prepared broth, such as precipitated proteins, is preferably removed between the feeding process and the fermentation process. Although any solid-liquid separation treatment may be employed as a method for removing the lees, precipitates are usually removed using a vessel called a whirlpool. In this case, although any temperature of 15°C or higher may be set as the broth temperature, the lees is usually removed in a temperature range of about 50°C to 80°C. The lees-removed broth (filtrate) is cooled to an appropriate fermentation temperature using a plate cooler or the like. This lees-removed broth is now treated as the fermentation raw material solution.

In the following fermentation process, yeast is inoculated into the cooled fermentation raw material solution to cause fermentation. The cooled fermentation raw material solution may be subjected to the fermentation process as it is, or may be subjected to the fermentation process after the extract concentration has been adjusted to a desired concentration. The yeast to be used for fermentation is not limited to a particular yeast and may be selected among typical yeasts employed for producing alcohols, as appropriate. Although the yeast may be either a top-fermenting yeast or bottom-fermenting yeast, the yeast is preferably a bottom-fermenting yeast from the viewpoint of applicability to large-scale brewing facilities.

The sugar content of the fermented beer-like effervescent beverage to be eventually obtained can be reduced by adding transglucosidase into a fermentation raw material solution, which causes non-assimilable sugars in the fermentation raw material solution to be converted into assimilable sugars, as recited in PTL 3.

In addition, the assimilable sugar content in the fermented beer-like effervescent beverage to be eventually obtained can be suppressed sufficiently low by promoting alcohol fermentation in the fermentation process and thus increasing the final fermentation degree, which causes assimilable sugars in the fermentation raw material solution to be efficiently converted into alcohols.

Further, a desired fermented beer-like effervescent beverage can be obtained through a storage process in which the obtained fermented solution is aged in a storage tank, and stored at a low temperature condition of about 0°C for stabilization, and a subsequent filtration process in which the fermented solution is filtrated to remove yeast, proteins insoluble around the temperature range and the like. The filtrate process may be any method with which yeast can be filtrated and removed, for example, diatomaceous earth filtration, filter filtration using a filter having an average pore diameter of 4 to 5 µm. Further, an appropriate amount of water may be added for dilution before or after the filtration such that the beverage may have a desired alcohol concentration. The obtained fermented beer-like effervescent beverage is usually bottled in a filling process and shipped as a product.

Other than the above, for example, if an alcohol-containing distillate is mixed into the solution in one of the processes following the fermentation process using yeast, fermented beer-like effervescent beverages corresponding to liqueurs defined in the liquor tax law may also be produced. The alcohol-containing distillate may be added either before water addition for alcohol concentration adjustment or after water addition. The alcohol-containing distillate to be added is preferably wheat spirits. With those, fermented beer-like effervescent beverages having a more preferable wheat-like flavor can be produced.

In a case where linalool or a fragrance containing linalool is a raw material, in order to suppress the loss of added linalool during the production process, the linalool or fragrance containing linalool is preferably added after the boiling treatment before the fermentation process and more preferably added during the storage process or filtration process thereafter.

In a case where the beer-like effervescent beverage according to the present invention is a non-fermented beer-like effervescent beverage, it should be noted that the sugars and linalool in the beverage are added as raw materials. Therefore, the use amounts of the raw material containing sugar and the raw material containing linalool are adjusted such that the sugar content and linalool/sugar ratio in the beverage fall into a specific range.

The raw material for producing the non-fermented beer-like effervescent beverage may be selected as appropriate among the raw materials for the fermented beer-like effervescent beverage described above except for the fermentation raw materials. It is also preferable to use a foaming agent such as soybean saponin, alginic acid ester, and quillaja saponin.

The non-fermented beer-like effervescent beverage may be produced through, for example, a production method including a preparation process of adjusting the use amount of a raw material containing sugar, a raw material containing linalool and the like, and mixing the raw materials to prepare a liquid preparation, and a gas introduction process of adding carbon dioxide into the liquid preparation obtained in the preparation process.

First, in the preparation process, raw materials are mixed to prepare the liquid preparation. It is preferable that all the raw materials other than carbon dioxide gas be mixed to prepare a liquid preparation in the preparation process. There is no particular order for mixing each of the raw materials. The entire raw materials may be added into the raw material water all at once, or may be sequentially added; for example, the remaining raw materials are added after previously added raw material has been dissolved. Alternatively, for example, solid raw materials (for example, powdered or granular) and alcohol may be mixed with raw material water, or the aqueous solutions of the solid raw materials, which have been prepared in advance in the form of an aqueous solution, may be mixed with alcohol and, if necessary, the raw material water.

In a case where insoluble matter has been generated in the liquid preparation prepared through the preparation process, it is preferable to carry out a treatment for removing insoluble matter such as filtration or the like from the liquid preparation before the gas introduction process. The method of treatment for removing insoluble matter is not limited to a particular method and may be carried out by a method generally accepted in the technical field, such as a filtration method, and a centrifugal separation method. In the present invention, the insoluble matter is preferably removed by filtration, more preferably removed by diatomaceous earth filtration.

Next, as the gas introduction process, carbon dioxide gas is added to the liquid preparation obtained in the preparation process. Through the above, a non-fermented beer-like effervescent beverage is obtained. Adding carbon dioxide imparts the same refreshment element as beer. The carbon dioxide gas may be added by a conventional method. For example, the liquid preparation obtained through the preparation process and carbonated water may be mixed, or carbon dioxide gas may be directly added into liquid preparation obtained through the preparation process so as to let the gas be dissolved thereinto.

The treatment for removing insoluble matter such as filtration may be further carried out after carbon dioxide gas has been added with respect to the obtained non-fermented beer-like effervescent beverage. The method of carrying out the treatment for removing insoluble matter is not limited to a particular treatment and may be carried out by a method generally accepted in the technical field.

### Examples

Although further detailed description of the present invention will be provided next while referring to Examples and Reference Examples, the present invention is not limited to the Examples below.

In the following examples, the linalool content in each of the fermented beer-like effervescent beverages was measured by GC-MS.

The sugar content in each of the fermented beer-like effervescent beverages was calculated by substituting the content of proteins, lipids, dietary fibers, mineral contents, alcohol content and moisture content from the entire beverage weight. The protein content of the fermented beer-like effervescent beverage was measured by a nitrogen determination method, the lipid content was measured by an ether extraction method, the dietary fiber content was measured by the Prosky method, the mineral content was measured by a direct ashing method, and the moisture content was measured by a reduced pressure heating and drying method. Each method was carried out by conventional methods.

### [Reference Example 1]

The contents of sugar and linalool were measured for commercially available beer (commercially available product A, alcohol concentration: 5% by volume), which is claimed to be a beer with a commercial malt usage ratio of 100% and having a low sugar content. As a result, it was found that the sugar content of the commercially available product A was 1.2 to 1.8 g/100 mL and the linalool content was below the detection limit. That is, it was found that the linalool/sugar ratio of the commercially available product A was 0.

### [Example 1]

The linalool content was adjusted such that the linalool/sugar ratio was 0 to 35 with respect to a low-sugar fermented beer-like effervescent beverage having a high malt usage ratio, and the obtained fermented beer-like effervescent beverage was evaluated in terms of its richness and sharpness.

First, 80 g of corn starch, 20 g of malted malt flour, and 270 mL of water were placed in a feed kettle as a raw material, kept at 70°C for 10 mins, and then boiled at 100°C for 20 mins. The saccharified solution was transferred to a feed tank, and 4290 mL of water, 480 g of malt, 15 g of glucoamylase (Gluczyme NLP, manufactured by Amano Enzyme Inc.) and 15 g of pullulanase (Amano 3, manufactured by Amano Enzyme Inc.) were further fed into the feed tank. The resulting mixture was saccharified at 62°C and heated at 76°C for 5 mins to prepare a Maische solution. The saccharification treatment time at 62°C was adjusted from 30 to 240 mins such that the sugar content of the eventually obtained beverage was set to be 1.0, 1.3, 1.5, or 2.0 g/100 mL. The obtained Maische solution was filtered through a lauter, and 80 g of saccharides and 1 g of hops were added to the obtained filtrate and boiled for 30 mins to prepare wort.

Yeast was added to the prepared wort for fermentation. Hops extract including linalool was added into the filtrate obtained by filtrating the fermented solution after fermentation such that the linalool/sugar ratio adjusted to 0, 2.5, 5, 15, 25, or 35, thereby obtaining a fermented beer-like effervescent beverage. Here, the linalool/sugar ratio of 0 means that hops extract containing linalool was not added.

Sensory evaluation was conducted on richness, sharpness, and the balance of both with respect to the obtained fermented beer-like effervescent beverages. Sensory evaluation was conducted by three expert panelists who tasted each of the fermented beer-like effervescent beverages blind, and evaluated on a rating scale of 1 to 5 shown below. The evaluation results of fermented beer-like effervescent beverages with sugar contents of 1.0, 1.3, 1.5, and 2.0 g/100 mL are shown in Tables 1 to 4, respectively.
Richness evaluation
   5: Excellent richness
   4: Good richness
   3: Neither
   2: Poor richness
   1: Very poor richness
Sharpness evaluation
   5: Excellent sharpness
   4: Good sharpness
   3: Neither
   2: Poor sharpness
   1: Very poor sharpness
Comprehensive evaluation
   5: Excellent balance between richness and sharpness
   4: Good balance between richness and sharpness
   3: Neither
   2: Poor balance between richness and sharpness
   1: Very poor balance between richness and sharpness

**[Table 1]**

| Sugar 1.0 g/100 mL | | | | | | |
|---|---|---|---|---|---|---|
| Linalool/sugar ratio | 0 | 2.5 | 5 | 15 | 25 | 35 |
| Richness | 3.0 | 3.7 | 4.7 | 5.0 | 5.0 | 5.0 |
| Sharpness | 5.0 | 5.0 | 5.0 | 5.0 | 4.0 | 3.0 |
| Comprehensive evaluation | 3.7 | 4.3 | 5.0 | 5.0 | 4.3 | 2.7 |

**[Table 2]**

| Sugar 1.3 g/100 mL | | | | | | |
|---|---|---|---|---|---|---|
| Linalool/sugar ratio | 0 | 2.5 | 5 | 15 | 25 | 35 |
| Richness | 3.0 | 4.0 | 4.7 | 5.0 | 5.0 | 5.0 |
| Sharpness | 4.7 | 5.0 | 5.0 | 5.0 | 4.0 | 3.0 |
| Comprehensive evaluation | 3.7 | 4.3 | 5.0 | 5.0 | 4.3 | 2.7 |

**[Table 3]**

| Sugar 1.5 g/100 mL | | | | | | |
|---|---|---|---|---|---|---|
| Linalool/sugar ratio | 0 | 2.5 | 5 | 15 | 25 | 35 |
| Richness | 3.0 | 4.3 | 4.7 | 5.0 | 5.0 | 5.0 |
| Sharpness | 4.0 | 5.0 | 5.0 | 4.7 | 3.7 | 2.7 |
| Comprehensive evaluation | 3.3 | 4.0 | 5.0 | 5.0 | 4.0 | 2.7 |

**[Table 4]**

| Sugar 2.0 g/100 mL | | | | | | |
|---|---|---|---|---|---|---|
| Linalool/sugar ratio | 0 | 2.5 | 5 | 15 | 25 | 35 |
| Richness | 3.0 | 4.3 | 5.0 | 5.0 | 5.0 | 5.0 |
| Sharpness | 2.0 | 2.7 | 2.7 | 2.7 | 2.7 | 2.0 |
| Comprehensive evaluation | 2.3 | 3.0 | 3.0 | 3.0 | 2.7 | 2.3 |

The results showed that every beverage in which linalool had been added such that the linalool/sugar ratio was 2.5 or more exhibited enhanced richness while every beverage without linalool exhibited extremely poor richness. The results also showed that in a case where linalool had been added into the beverage with a sugar content of 1.3 g/100 mL or more such that the linalool/sugar ratios were in a range of 2.5 to 25, the sharpness improved in addition to the richness and the balance between the richness and sharpness was excellent. Although the beverages with a linalool/sugar ratio of 35 exhibited excellent richness, the sharpness was deteriorated and thus the balance between richness and sharpness decreased. Further, beverages with a sufficiently low sugar content of 1.0 g/100 mL exhibited excellent sharpness regardless of whether linalool was added or not.

## Claims

1. A beer-like effervescent beverage,
wherein a sugar content is 0.9 to 1.5 g/100 mL and a ratio of a linalool content (µg/L) relative to the sugar content (g/100 mL) is 5 to 15.

2. The beer-like effervescent beverage according to Claim 1, which is a fermented beer-like effervescent beverage having a malt usage ratio relative to fermentation raw material of 50% or more.

3. A method of producing a beer-like effervescent beverage in which a sugar content is 0.9 to 1.5 g/100 mL and a ratio of a linalool content (µg/L) relative to the sugar content (g/100 mL) is 5 to 15, the method comprising:
a process of fermenting a fermentation raw material having a malt usage ratio of 50% or more with yeast.

## Patentansprüche

1. Bierähnliches Sprudelgetränk,
wobei ein Zuckergehalt von 0,9 bis 1,5 g/100 ml und ein Verhältnis eines Linaloolgehaltes (µg/l) relativ zum Zuckergehalt (g/100 ml) 5 bis 15 beträgt.

2. Bierähnliches Sprudelgetränk gemäß Anspruch 1, das ein fermentiertes, bierähnliches Sprudelgetränk mit einem Malzverwendungsverhältnis relativ zum Fermentierungsrohmaterial von 50 % oder mehr ist.

3. Verfahren zum Herstellen eines bierähnlichen Sprudelgetränks, bei dem ein Zuckergehalt von 0,9 bis 1,5 g/100 ml und ein Verhältnis eines Linaloolgehaltes (µg/l) relativ zum Zuckergehalt (g/100 ml) 5 bis 15 beträgt, umfassend:
einen Prozess zum Fermentieren eines Fermentierungsrohmaterials mit einem Malzverwendungsverhältnis von 50 % oder mehr mit Hefe.

## Revendications

1. Boisson effervescente de type bière,
dans laquelle une teneur en sucre est de 0,9 à 1,5 g/100 ml et un rapport entre la teneur en linalol (µg/L) et la teneur en sucre (g/100 ml) est de 5 à 15.

2. Boisson effervescente de type bière selon la revendication 1, qui est une boisson effervescente fermentée de type bière ayant un rapport d'utilisation du malt par rapport à la matière première de fermentation de 50 % ou plus.

3. Procédé de production d'une boisson effervescente de type bière dont une teneur en sucre est de 0,9 à 1,5 g/100 ml et dont un rapport entre une teneur en linalol (µg/L) et la teneur en sucre (g/100 ml) est de 5 à 15, le procédé comprenant :
un procédé de fermentation d'une matière première de fermentation ayant un rapport d'utilisation du malt de 50 % ou plus avec de la levure.
